# EUROPEAN PATENT APPLICATION

(11) **EP 1 898 543 A1**
(43) Date of publication of application: **12.03.2008**
(21) Application number: 06768142.9
(22) Date of filing: 12.07.2006
(51) Int. Cl.: H04J 11/00

(54) **RADIO COMMUNICATION APPARATUS AND RADIO COMMUNICATION METHOD IN MULTICARRIER COMMUNICATION**

(30) Priority: 14.07.2005 JP 2005205550
(71) Applicant: MATSUSHITA ELECTRIC INDUSTRIAL CO., LTD., Osaka 571-8501 (JP)
(72) Inventor: HIRAMATSU, Katsuhiko Matsushita Electric Industrial Co.,Ltd, 2-1-61, Shiromi, Chuo-ku Osaka 540-6207 (JP); KAYAMA, Hidenori Panasonic Mobile Communications R&D Lab.Co.,Ltd, Sendai-shi Miyagi 981-3206 (JP)
(74) Representative: Zimmer, Franz-Josef
(86) International application number: PCT/JP2006/313878
(87) International publication number: WO 2007/007795

(57) **Abstract**

A wireless communication apparatus capable of performing an efficient communication even in a case of frequency multiplexing a plurality of OFDM symbols having GIs the lengths of which are different from each other in a multicarrier communication. In this wireless communication apparatus (100), encoding parts (102-1, 102-2) encode interleaved bit sequences (#1, #2). Modulating parts (103-1, 103-2) modulate the encoded bit sequences (#1, #2) to generate data symbols (#1, #2). Mapping parts (104-1, 104-2) map pilot symbols onto the subcarriers of OFDM symbols in which no ISI occurs, while mapping the data symbols (#1, #2) onto the subcarriers of the other OFDM symbols. IFFT parts (105-1, 105-2) perform IFFTs of the subcarriers, onto which the pilot symbols or the data symbols (#1, #2) have been mapped, to obtain the OFDM symbols (#1, #2).

## Description

### Technical Field

The present invention relates to a radio communication apparatus and radio communication method in multicarrier communication.

### Background Art

In the field of radio communication, especially in mobile communication, a variety of information such as image and data in addition to voice is becoming transmission target in recent years. It is anticipated that the demand for high-speed transmission becomes further increased in the future, and to perform high-speed transmission, a radio transmission scheme, which utilizes limited frequency resources more effectively and achieves high transmission efficiency, has been required. These demands are especially high on a downlink transmission from a radio communication base station apparatus (hereinafter simply "base station") to a radio communication mobile station apparatus (hereinafter simply "mobile station").

OFDM (Orthogonal Frequency Division Multiplexing) is one of radio transmission techniques, for meeting these demands. OFDM is one of multicarrier communication techniques, whereby data is transmitted in parallel using a large number of subcarriers, and it is known that OFDM provides high frequency efficiency and reducing inter-symbol interference ("ISI") under a multipath environment and is effective to improve transmission efficiency. In addition, according to OFDM, to reduce the influence of distortion due to multipath, a guard interval ("GI") is provided, whereby the same signal as the tail part of an OFDM symbol is attached to the beginning of that OFDM symbol. When a delay amount of a delay wave is within a GI period, ISI is prevented and orthogonality between subcarriers in the OFDM symbol is maintained.

Here, in mobile communications, besides one-to one communication (unicast communication) including telephone services, where a base station transmits different data to different mobile stations, one-to-many communication (multicast communication) including MBMS (Multimedia Broadcast/Multicast Service) where a base station transmits the same data to a plurality of different mobile station, has been recently studied (see, for example, non-patent document 1).

Unicast communication is usually one-to-one communication, so that the GI length is determined in accordance with the distance between a base station and each mobile station, that is, a delay amount for each mobile station. On the other hand, multicast communication is one-to-many communication, so that the GI length is determined in accordance with the distance between a base station and a cell edge, that is, the maximum delay amount. Consequently, a GI in multicast communication usually becomes longer than a GI in unicast communication.
Non-patent Document 1: 3GPP TS 23.246 V.6.2.0 (2004-03) Multimedia Broadcast / Multicast Service (MBMS); Architecture and functional description (Release 6)

### Disclosure of Invention

### Problems to be Solved by the Invention

Here, it is assumed that a base station performs unicast communication and multicast communication simultaneously. In this case, frequency multiplexing an OFDM symbol for unicast communication and an OFDM symbol for multicast communication is assumed, even when a plurality of OFDM symbols comprising different GI lengths are frequency multiplexed, it is important to perform effective communication.

It is therefore an object of the present invention to provide a radio communication station apparatus and a radio communication method that can perform effective communication when a plurality of OFDM symbols comprising different GI lengths are frequency multiplexed in multicarrier communication.

### Means for Solving the Problem

The radio communication apparatus of the present invention employs a configuration having: a multiplexing section that frequency multiplexes a first OFDM symbol sequence and a second OFDM symbol sequence, the first OFDM symbol sequence comprising a first guard interval between a plurality of consecutive first OFDM symbols in the time domain, and the second OFDM symbol sequence comprising a second guard interval of a different length than the first guard interval between a plurality of consecutive second OFDM symbols in the time domain; and a mapping section that maps pilot symbols to subcarriers in an OFDM symbol including the first OFDM symbol and the second OFDM symbol such that a tail part of one OFDM symbol is not included in a period of the other OFDM symbol .

### Advantageous Effect of the Invention

According to the present invention, effective communication is possible even when a plurality of OFDM symbols comprising different GI lengths are frequency multiplexed.

### Brief Description of Drawings

FIG.1 is a block diagram showing a radio communication apparatus according to the Embodiment of the present invention;
FIG.2 illustrates a GI according to the Embodiment;
FIG.3 illustrates frequency multiplex according to the Embodiment;
FIG.4 illustrates distribution chart of the amount of ISI according to the Embodiment;
FIG.5 illustrates mapping example 1 according to the Embodiment;
FIG.6 illustrates mapping example 2 according to the Embodiment;
FIG.7 illustrates mapping example 3 according to the Embodiment;
FIG.8 illustrates mapping example 4 according to the Embodiment;
FIG.9 illustrates mapping example 5 according to the Embodiment; and
FIG.10 illustrates mapping example 6 according to the Embodiment.

### Best Mode for Carrying Out the Invention

An embodiment of the present invention will be explained below in detail with reference to the accompanying drawings.

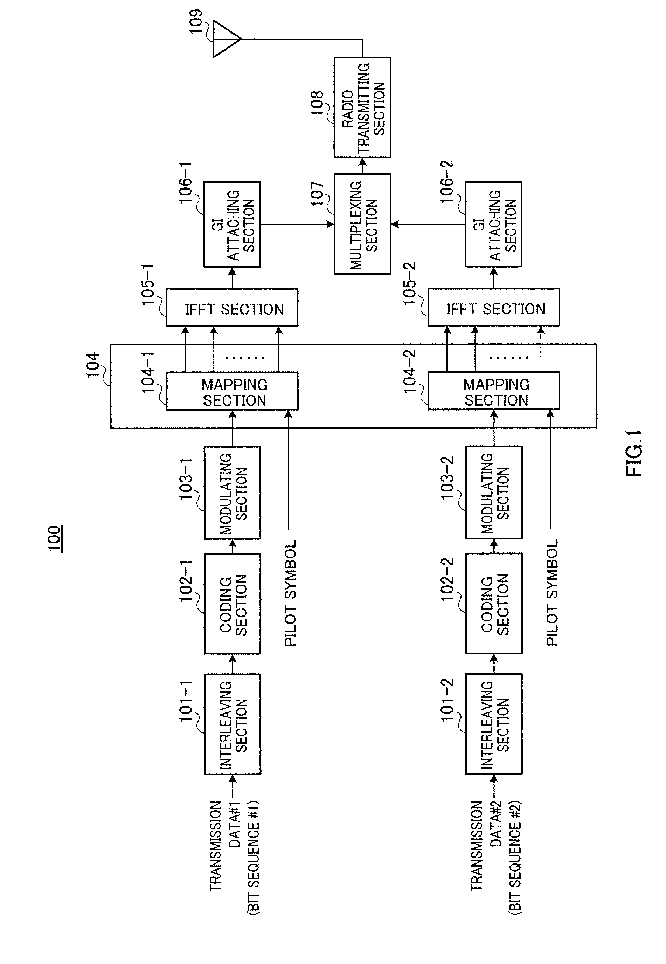

FIG.1 shows the configuration of radio communication apparatus 100 according to the present embodiment. A case will be explained below where radio communication apparatus 100 is provided in a base station and the base station transmits an OFDM symbol to a mobile station on a downlink in a mobile communication system.

In radio communication system 100, interleaving section 101-1, coding section 102-1, modulating section 103-1, mapping section 104-1, IFFT (Inverse Fast Fourier Transform) section 105-1 and GI attaching section 106-1 are for multicast communication use. On the other hand, interleaving section 101-2, coding section 102-2, modulating section 103-2, mapping section 104-2, IFFT section 105-2 and GI attaching section 106-2 are for unicast communication use. Further, mapping section 104 is comprised of mapping section 104-1 and mapping section 104-2.

Interleaving section 101-1 interleaves transmission data #1 (bit sequence #1) to be subjected to multicast communication and outputs the interleaved data to coding section 102-1.

Coding section 102-1 encodesbit sequence #1 after the interleaving and outputs the result to modulating section 103-1.

Modulating section 103-1 modulates bit sequence #1 after the encoding,to generate data symbol #1 and outputs the data symbol #1 to mapping section 104-1.

Mapping section 104-1 maps a pilot symbol or the data symbol #1 to a plurality of subcarriers forming an OFDM symbol, and outputs the result to IFFT section 105-1. The mapping will be described in detail later.

IFFT section 105-1 performs IFFT over a plurality of subcarriers where the pilot symbol or data symbol #1 are mapped, to acquire OFDM symbol #1, which is a multicarrier signal.

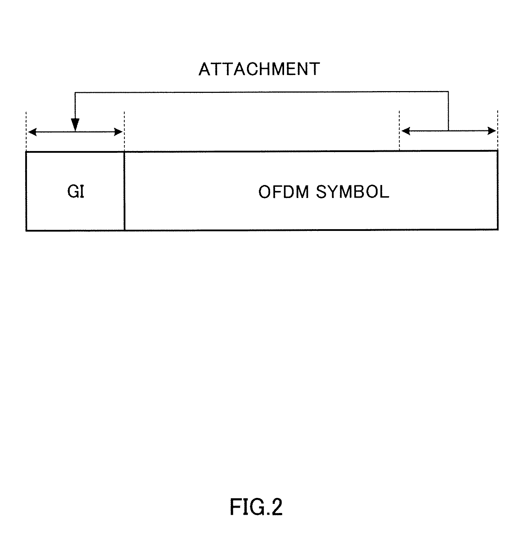

As shown in FIG.2, GI attaching section 106-1 attaches the same signal as the tail part of OFDM symbol #1, to the beginning of that OFDM symbol, to provide a GI, and outputs OFDM symbol #1 with the GI to multiplexing section 107.

On the other hand, interleaving section 101-2 interleaves transmission data #2 (bit sequence #2) to be subjected to unicast communication and outputs the interleaved data to coding section 102-2.

Coding section 102-2 encodes bit sequence #2 after the interleaving and outputs the result to modulating section 103-2.

Modulating section 103-2 modulates bit sequence #2 after the encoding, to generate data symbol #2 and outputs the data symbol #2 to mapping section 104-2.

Mapping section 104-2 maps a pilot symbol or the data symbol #2 to a plurality of subcarriers forming an OFDM symbol and outputs the result to IFFT section 105-2. The mapping will be described in detail later.

IFFT section 105-2 performs IFFT over a plurality of subcarriers where the pilot symbols or the data symbol #2 are mapped, to acquire OFDM symbol #2, which is a multicarrier signal.

As shown in FIG.2, GI attaching section 106-2 attaches the same signal as the tail part of OFDM symbol #2, to the beginning of that OFDM symbol, to provide a GI, and outputs OFDM symbol #2 with the GI to multiplexing section 107.

Here, GI attaching section 106-2 is for unicast communication use, so that a GI attached by GI attaching section 106-2 is usually shorter than a GI attached by GI attaching section 106-1 used in multicast communication.

Multiplexing section 107 frequency multiplexes OFDM symbol #1 with an attachment of a GI and OFDM symbol #2 with an attachment of a GI that is shorter than the GI attached to OFDM symbol #1, and outputs the result to radio transmitting section 108.

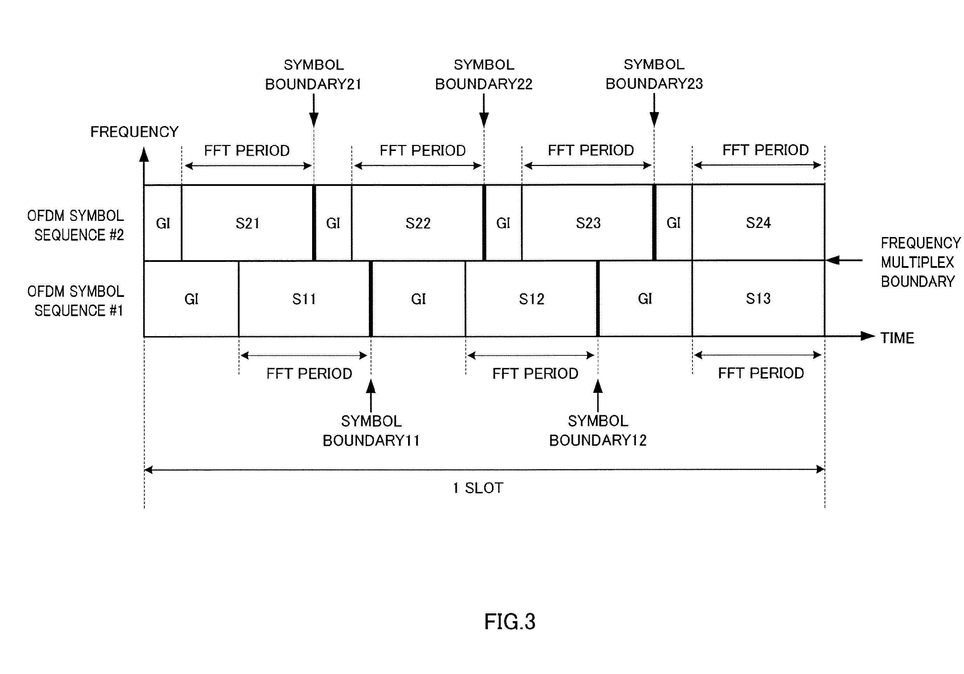

The above-described processing is repeated on a per slot basis. That is, as shown in FIG.3, multiplexing section 107 frequency multiplexes OFDM symbol sequence #1 comprising greater GIs between a plurality of consecutive OFDM symbols (S11, S12 and S13) in the time domain and OFDM symbol sequence #2 comprising shorter GIs between a plurality of consecutive OFDM symbols (S21, S22, S23 and S24) in the time domain, on a per slot basis. At this time, multiplexing section 107 frequency multiplexes OFDM symbol sequence #1 and OFDM symbol sequence #2, defining the boundary (frequency multiplex boundary) between OFDM symbol sequence #1 and OFDM symbol sequence #2 in the frequency domain at the center frequency of frequency bandwidth used for transmissions of OFDM symbol sequence #1 and OFDM symbol sequence #2. In OFDM, the center frequency of the transmission bandwidth is influenced by DC (Direct Current) offset, and so usually transmission data is not assigned to the center frequency. In this way, by using the center frequency as a frequency multiplex boundary, it is possible to utilize the center frequency effectively to which transmission data is not assigned as a guard band between OFDM symbol sequence #1 and OFDM symbol sequence #2, so that effective communication is possible. Meanwhile, according to the example in FIG.3, three OFDM symbols form one slot in OFDM symbol sequence #1, four OFDM symbols form one slot in OFDM symbol sequence #2.

Then, radio transmitting processing section 108 performs transmission processing including D/A conversion, amplification and up-conversion for the frequency multiplexed OFDM symbols, and transmits the results from antenna 109 to a mobile station.

Next, the pilot symbol and the data symbol mapping will be described in detail.

First, ISI in a case where a plurality of OFDM symbols comprising different GI lengths are frequency multiplexed as above will be described.

A mobile station of the receiving side performs FFT (Fast Fourier Transform) to OFDM symbols in FFT periods shown in FIG.3 in accordance with provided transmission services. That is, a mobile station in multicast communication performs FFT to OFDM symbols S11, S12 and S13 and a mobile station in unicast communication performs FFT to OFDM symbols S21, S22, S23 and S24. At this time, mobile stations cannot demultiplex frequency multiplexed OFDM symbol sequence #1 and OFDM symbol sequence #2 before FFT, so that the mobile stations perform FFT to the frequency multiplexed OFDM symbol sequences.

Here, in the mobile station in multicast communication, OFDM symbol periods (namely, FFT period) of OFDM symbols S11 and S12 in OFDM symbol sequence #1 include the tail part of OFDM symbols S21 and S22 (namely, symbol boundaries 21 and 22 of S21 and S22) in OFDM symbol sequence #2. Similarly, with the mobile station in unicast communication, OFDM symbol periods (namely, FFT period) of OFDM symbols S22 and S23 in OFDM symbol sequence #2 include the tail part of OFDM symbols S11 and S12 (namely, symbol boundaries 11 and 12 of S11 and S12) in OFDM symbol sequence #1.

In this way, if the tail part of an OFDM symbol (a symbol boundary) is included in the period of an OFDM symbol (FFT period) of a different bandwidth, the FFT period in the time domain becomes discontinuous and orthogonality is lost in a discontinuous period, and so, ISI is produced in symbols after FFT. That is, OFDM symbols S11 and S12 in OFDM symbol sequence #1 lose orthogonality with respect to OFDM symbol sequence #2, and so, ISI is produced between OFDM symbol sequence #1 and OFDM symbol sequence #2. In addition, OFDM symbols S22 and S23 in OFDM symbol sequence #2 lose orthogonality with respect to OFDM symbol sequence #1, and so, ISI is produced between OFDM symbol sequence #1 and OFDM symbol sequence #2.

On the other hand, if the tail part of an OFDM symbol (a symbol boundary) is not included in the period of an OFDM symbol (FFT period) of a different bandwidth, the FFT period in the time domain becomes continuous and orthogonality is maintained between the OFDM symbols, so that ISI is not produced in symbols after FFT. That is, ISI is not produced at OFDM symbol S13 in OFDM symbol sequence #1 and at OFDM symbols S21 and S24 in OFDM symbol sequence #2.

Moreover, ISI produced in this way tends to be gradually less when the distance from frequency multiplex boundary increases.

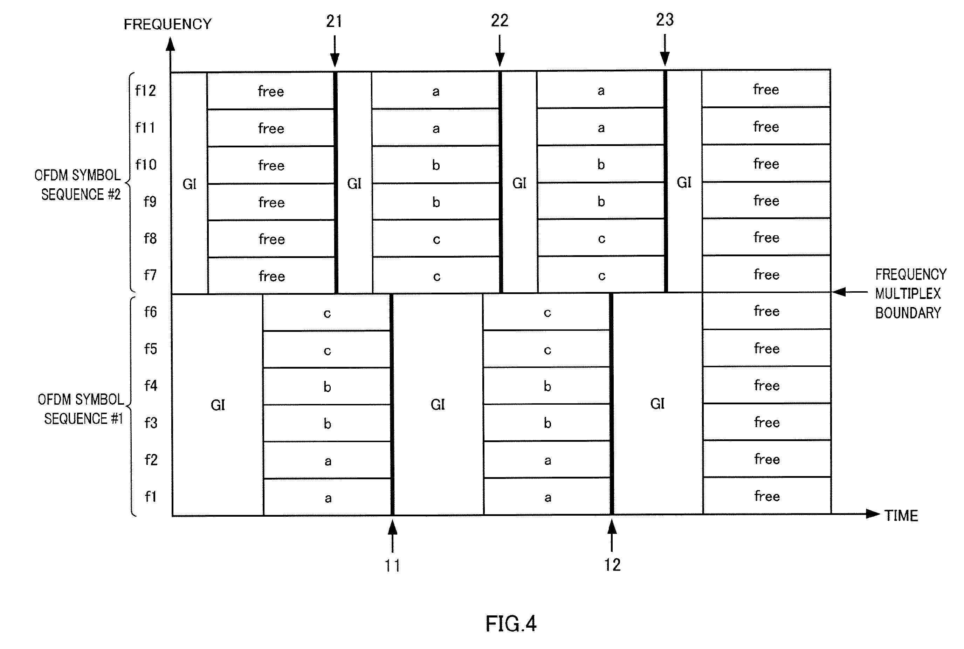

FIG.4 shows a distribution of amounts of ISI produced as above. Meanwhile, in the example of FIG.4, OFDM symbol sequence #1 is formed with subcarriers f1 to f6, and OFDM symbol sequence #2 is formed with subcarriers f7 to f12. Moreover, symbol boundaries 11, 12, 21, 22 and 23 in FIG.4 are equivalent to symbol boundaries shown in FIG.3, respectively.

In the figure, in subcarriers designated "free", the tail part of the OFDM symbol (a symbol boundary) is not included in the period of a different OFDM symbol and so ISI is not produced. In Other subcarriers designated (a), (b) and (c), the tail parts of the OFDM symbols (symbol boundaries) is included in the period of a different OFDM symbol, and therefore ISI is produced. The frequency multiplex boundary is closer to (a), to (b) and to (c), in order, and so ISI increases. That is, there is small ISI in subcarriers f1, f2, f11 and f12 sorted as subcarrier (a), there is medium ISI in subcarriers f3, f4, f9 and f10 sorted as subcarrier (b), and there is large ISI in subcarriers f5, f6, f7 and f8 sorted as subcarrier (c) . By this means, the amount of ISI varies per OFDM symbol in the frequency multiplexed OFDM symbol sequence #1 and OFDM symbol sequence #2 comprising different GI lengths. Within the OFDM symbol, additionally, the amount of ISI varies per subcarrier in accordance with the distance from the frequency multiplex boundary. As described above, in the present embodiment, subcarriers f1 to f12 are sorted into three levels (a), (b) and (c), based on the distance from the frequency multiplex boundary. That is, in the present embodiment, subcarriers f5, f6, f7 and f8 are designated subcarriers (c) of large ISI, which are located within two subcarriers from the frequency multiplex boundary, subcarriers f3, f4, f9 and f10 are subcarriers (b) of medium ISI, which are located between three subcarriers and more and four subcarriers or less from the frequency multiplex boundary, and subcarriers f1, f2, f11 and f12 are designated subcarriers (a) of small ISI, which are located from five subcarriers and more from the frequency multiplex boundary.

Then, mapping section 104 maps the pilot symbols and the data symbols to the subcarriers as described below.

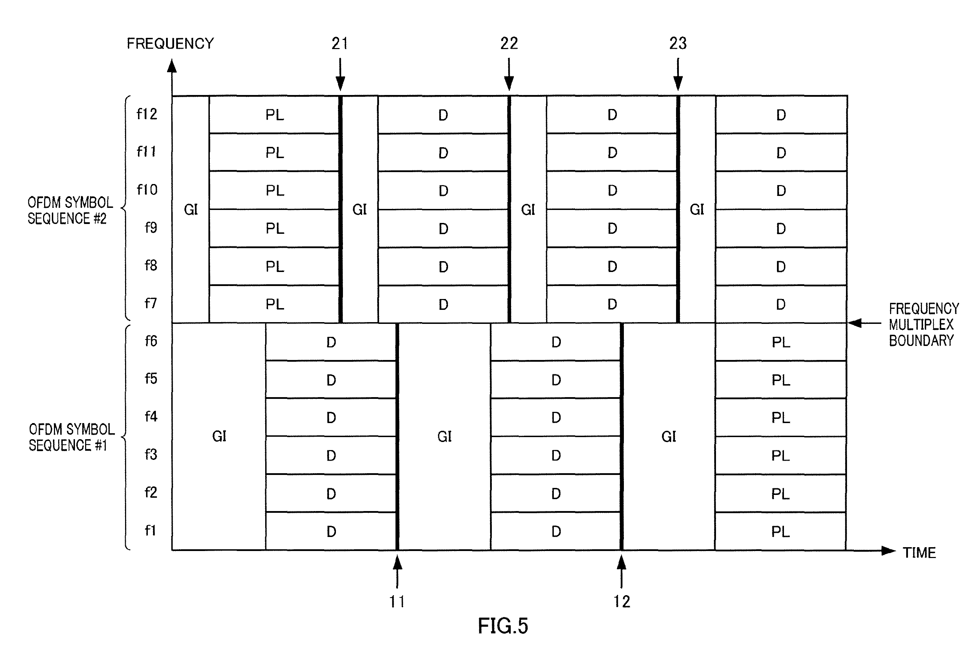

### <Mapping example 1 (FIG.5)>

In this example, mapping section 104 maps the pilot symbols PL to each subcarrier in the OFDM symbol where no ISI is produced (the OFDM symbol formed with the subcarriers designated "free" in FIG.4) and maps the data symbols D to each subcarrier in other OFDM symbols. That is, in OFDM symbol sequence #1, the pilot symbols PL are mapped to the subcarriers in OFDM symbols without including the tail parts 21, 22 and 23 of the OFDM symbols in OFDM symbol sequence #2. In OFDM symbol sequence #2, the pilot symbols PL are mapped to the subcarriers in OFDM symbols without including the tail parts 11 and 12 of the OFDM symbols in OFDM symbol sequence #1.

Meanwhile, when a mobile station performs, for example, channel estimation, it is enough to provide in every slot only one OFDM symbol formed with pilot symbols, so that, as shown in the example in FIG.5, in OFDM symbol sequence #2, only one "free" OFDM symbol is used for transmitting the pilot symbols PL, the other "free" OFDM symbol is used for transmitting the data symbols D. However, to improve the accuracy of channel estimation, both "free" OFDM symbols may be used for transmitting the pilot symbols PL. Moreover, as shown in the example of FIG.5, the "free" OFDM symbol at the top of the slot is used for transmitting the pilot symbols PL in OFDM symbol sequence #2. Instead, the "free" OFDM symbol at the tail of the slot may be used to transmit pilot symbols PL. Furthermore, the pilot symbols PL may be mapped only to part of "free" subcarriers.

This mapping makes it possible to prevent received quality of pilot symbols from decreasing due to ISI, so that channel estimation accuracy using pilot symbols can improve.

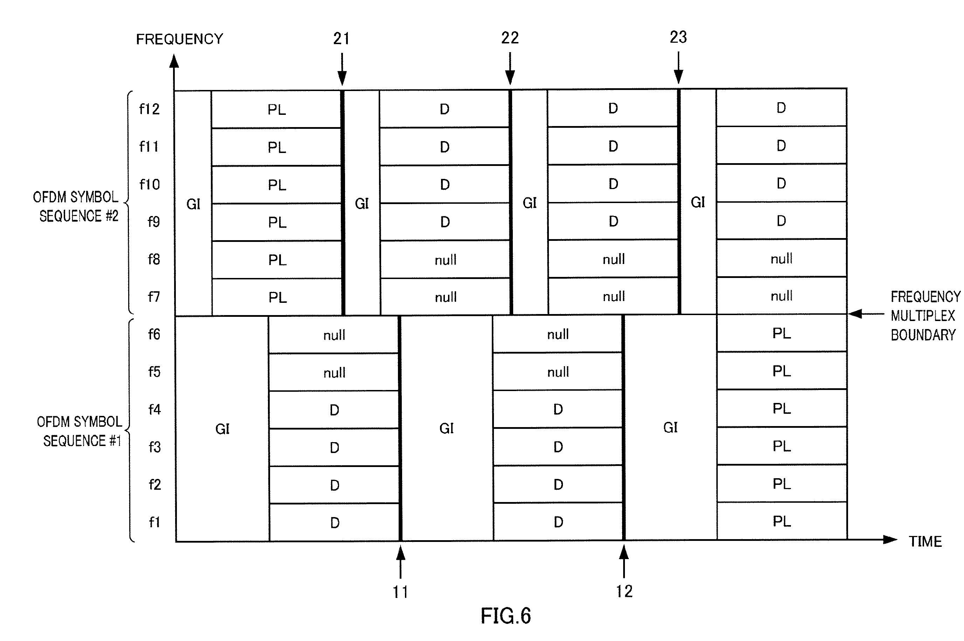

### <Mapping example 2 (FIG.6)>

Error occurrence probability of the data symbols D mapped to the subcarriers (c) of large ISI, is high and it is necessary to retransmit the data symbols D where error occurs in a communication system adopting ARQ (Automatic Repeat Request), if the data symbols D are mapped to subcarriers (c) of large ISI, retransmissions often occur, and so transmission efficiency has to decrease.
Then, this example is different from mapping example 1 in that mapping section 104 does not map the data symbols D to the subcarriers of ; largest ISI, that is, the subcarriers (c) shown in FIG.4 (namely, making the subcarriers designated (c) in FIG. 4 null). In other words, mapping section 104 maps the data symbols D only to subcarriers (a) and (b) where ISI is relatively small, which are at a certain distance or farther from the frequency multiplex boundary.

In this way, the data symbols are not mapped to subcarriers of large ISI, so that it is possible to prevent frequent occurrence of data symbol retransmission, thereby preventing transmission efficiency decrease and performing effective communication.

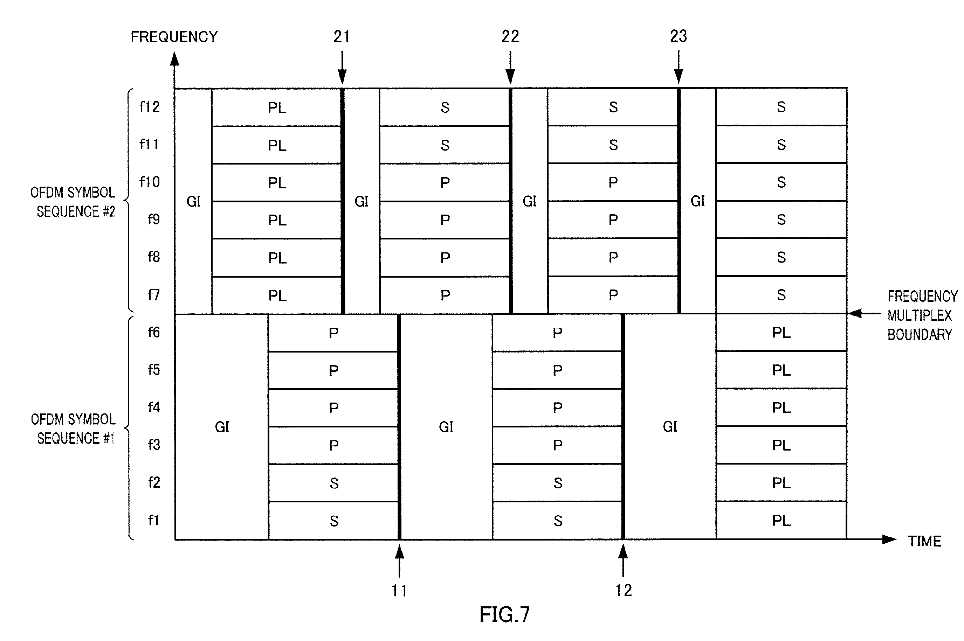

### <Mapping Example 3 (FIG.7)>

According to this example, coding sections 102-1 and 102-2 shown in FIG.1 perform error correcting coding to transmission data (bit sequence) using systematic codes such as turbo code and LDPC code. By encoding the transmission bit sequence using systematic code, coding sections 102-1 and 102-2 generate systematic bits S, which are transmission bits themselves, andparitybits P, which are redundant bits.

Here, in the mobile station of the receiving side of an OFDM symbol, when error occurs in the systematic bits S, error rate performances significantly decrease. However, even when error occurs in some of the parity bits P, required error rate performances can be maintained. Then, this example is different from mapping example 1 to that mapping section 104 maps the data symbols formed with the systematic bits S to the subcarriers of smallest ISI, that is, the subcarriers designated (a) in FIG.4, and maps data symbols formed with the parity bits P to the subcarriers designated (b) and (c) in FIG.4. That is, mapping section 104 maps the systematic bits S to the subcarriers (a) which are at a certain distance or farther from the frequency multiplex boundary and maps the parity bits P to the subcarriers (b) and (c) within a certain distance from the frequency multiplex boundary.

In this way, by mapping systematic bits in the subcarriers of small ISI, it is possible to prevent significant decrease of error rate performances by error occurrence in the systematic bits, so that effective communication can be performed.

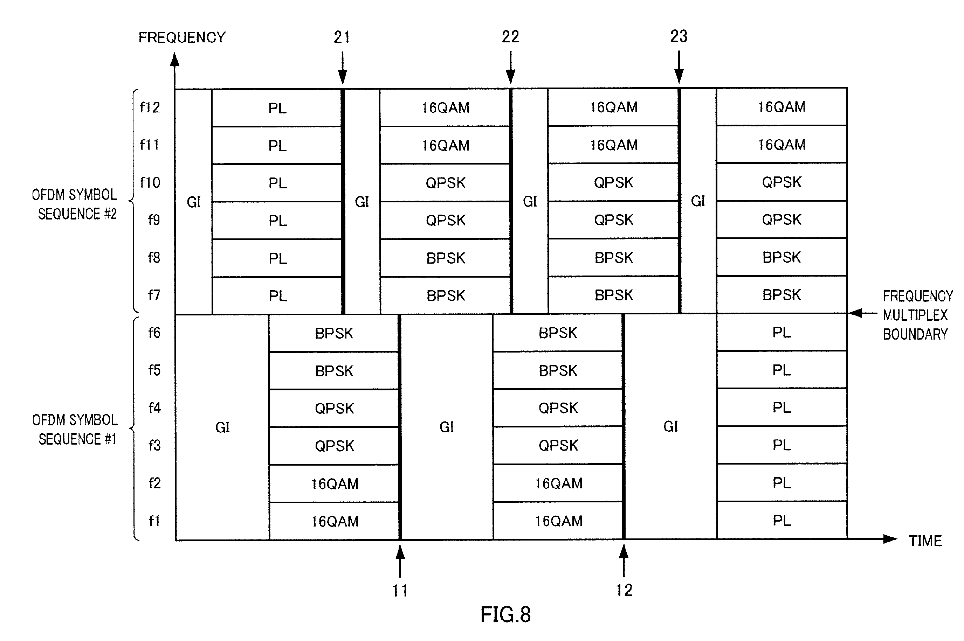

### <Mapping example 4 (FIG.8)>

In the example, modulating sections 103-1 and 103-2 shown in FIG.1 perform adaptive modulation controlling modulation schemes in accordance with received quality in the mobile station. That is, modulating sections 103-1 and 103-2 shown in FIG.1 perform modulation using modulation schemes of greater M-ary numbers when received quality is better. Here, one of BPSK, QPSK and 16QAM is used as modulation schemes.

Then, this example is different from mapping example 1 in that mapping section 104 maps the data symbols which M-ary number is greater, to the subcarriers located farther from the frequency multiplex boundary. That is, as shown in FIG. 8, mapping section 104 maps the data symbols subjected to 16QAM modulation to the subcarriers of the smallest ISI, at farthest position from the frequency multiplex boundary, that is, subcarriers designated (a) inFIG.4. Accordingly, in ascending order of ISI, mapping section 104 maps the data symbols subjected to QPSK modulation to the subcarriers designated (b) in FIG.4 and the data symbols subjected to BPSK modulation to the subcarriers designated (c) in FIG.4.

By these mappings, data symbols modulated by a modulation scheme that is more susceptible to interference are mapped to subcarriers of smaller ISI, so that it is possible to minimize ISI of data symbols which is more susceptible to interference, as a result, decrease of error rate performances is prevented and effective communication is possible.

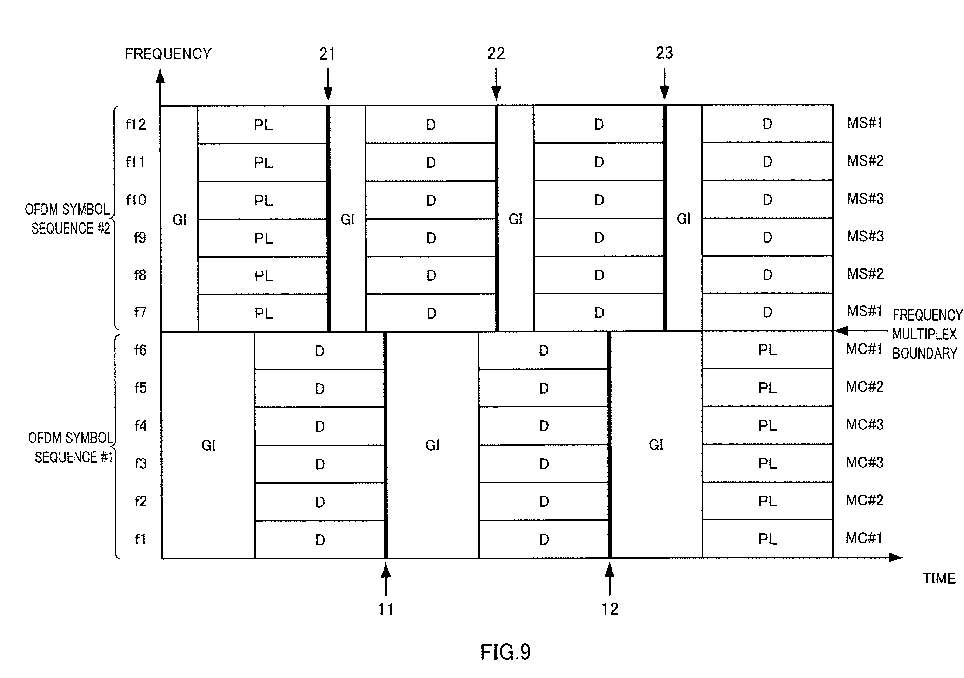

### <Mapping example 5 (FIG.9)>

This example is different from mapping example 1 in that, when the subcarriers are assigned to a plurality of mobile stations in OFDM symbol sequence #2 subjected to unicast communication, mapping section 104 maps data symbols for mobile stations to subcarriers such that ISI of mobile stations is averaged between the mobile stations. Moreover, this example is different from mapping example 1 in that, when a plurality of multicast communications are performed in parallel in OFDM symbol sequence #1 to be subjected to multicast communication, mapping section 104 maps data symbols for multicast communications to subcarriers such that ISI of multicast communications is averaged between the multicast communications.

In this way, to average ISI between the mobile stations and between the multicast communications, as shown in FIG.9, mapping section 104 maps the data symbols D to the subcarriers.

To be more specific, mapping section 104 maps the data symbols D for mobile station #1 (MS #1) to subcarrier f12 of small ISI, and subcarrier f7 of large ISI. That is, mapping section 104 maps the different data symbols for the same destination to both the nearest subcarrier and farthest subcarrier from the frequency multiplex boundary in OFDM symbol sequence #2 . In addition, mapping section 104 maps the data symbols D for mobile station #2 (MS#2) to subcarrier f11 of small ISI and subcarrier f8 of large ISI, and maps the data symbols D for mobile station #3 (MS#3) to subcarriers f9 and f10 of medium ISI.

Moreover, mapping section 104 maps the data symbols D for multicast communication #1 (MC#1) to subcarrier f1 of small ISI and subcarrier f6 of large ISI. That is, mapping section 104 maps different data symbols for the same multicast communication to both the nearest subcarrier and the farthest subcarrier from the frequency multiplex boundary, in OFDM symbol sequence #1. In addition, mapping section 104 maps the data symbols D for multicast communication #2 (MC#2) to subcarrier f2 of small ISI and subcarrier f5 of large ISI, and maps the data symbols D for multicast communication #3 (MC#3) to subcarriers f3 and f4 of medium ISI.

These mappings make it possible to average the amounts of ISI between mobile stations and between multicast communications, so that error rate performances of data symbols improve and effective communication is possible.

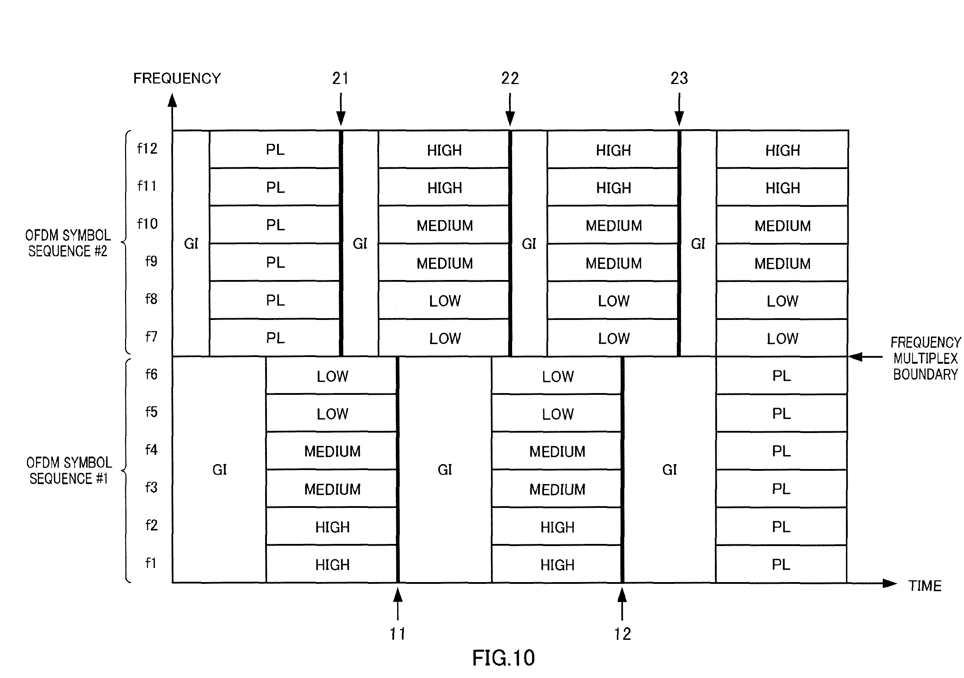

### <Mapping example 6 (FIG.10)>

This example is different from mapping example 1 in that mapping section 104 maps the data symbols required for higher QoS (Quality of Service) to subcarriers at farther positions from the frequency multiplex boundary. That is, as shown in FIG.10, mapping section 104 maps the data symbols subjected to high QoS requirement to the subcarriers of, the smallest ISI, that is, subcarriers designated (a) in FIG. 4. Accordingly, in ascending order of ISI, mapping section 104 maps the data symbols subjected to medium QoS requirement to the subcarriers designated (b) in FIG. 4, and maps the data symbols subjected to small QoS requirement to the subcarriers designated (c) in FIG.4.

By these mappings, the data symbols requested higher QoS enable amount of ISI to decrease more, so that it is possible to achieve required QoS and effective communication is possible.

Embodiment of the present invention have been described.

Moreover, radio communication apparatus 100 stores a table which shows quality degradation for each data symbol generated based on the distribution of amounts of ISI (FIG.4), and at determining MCS (Modulation and Coding Scheme), refers to the table in accordance with received quality information reported from a mobile station, and may determine MCS modified by an amount of quality degradation for each data symbol. Moreover, in the table, instead of the amount of quality degradation per data symbol, radio communication apparatus 100 stores an average of quality degradation per subcarrier or a per plurality of subcarriers.

Incidentally, base station may be referred to as "Node-B", a subcarrier may be referred to as "tone".

Moreover, although a case has been described with the above embodiment where the pilot symbols are mapped per a slot, the pilot symbols may be mapped per a flame.

Moreover, although with the above embodiments cases have been described where the present invention is configured by hardware, the present invention may be implemented by software.

Each function block employed in the description of each of the aforementioned embodiments may typically be implemented as an LSI constituted by an integrated circuit. These may be individual chips or partially or totally contained on a single chip. "LSI" is adopted here but this may also be referred to as "IC", "system LSI", "super LSI" or "ultra LSI" depending on differing extents of integration.

Further, the method of circuit integration is not limited to LSI's, and implementation using dedicated circuitry or general purpose processors is also possible. After LSI manufacture, utilization of an FPGA (Field Programmable Gate Array) or a reconfigurable processor where connections and settings of circuit cells within an LSI can be reconfigured is also possible.

Further, if integrated circuit technology comes out to replace LSI's as a result of the advancement of semiconductor technology or a derivative other technology, it is naturally also possible to carry out function block integration using this technology. Application of biotechnology is also possible.

The present application is based on Japanese Patent Application No.2005-205550, filed on July 14, 2005, the entire content of which is expressly incorporated by reference herein.

### Industrial Applicability

The present invention is applicable to, for example, mobile communication systems.

## Claims

1. A radio communication apparatus comprising:
a multiplexing section that frequency multiplexes a first OFDM symbol sequence and a second OFDM symbol sequence, the first OFDM symbol sequence comprising a first guard interval between a plurality of consecutive first OFDM symbols in the time domain, and the second OFDM symbol sequence comprising a second guard interval of a different length than the first guard interval between a plurality of consecutive second OFDM symbols in the time domain; and
a mapping section that maps pilot symbols to subcarriers in an OFDM symbol including the first OFDM symbol and the second OFDM symbol such that a tail part of one OFDM symbol is not included in a period of the other OFDM symbol.

2. The radio communication apparatus according to claim 1, wherein the mapping section further maps a data symbol only to a subcarrier at a certain distance or farther from a boundary between the first OFDM symbol sequence and the second OFDM symbol sequence in the frequency domain.

3. The radio communication apparatus according to claim 1, further comprising a coding section that encodes transmission data to generate a systematic bit and a parity bit;
wherein the mapping section further maps the systematic bit to a subcarrier at a certain distance or farther from a boundary between the first OFDM symbol sequence and the second OFDM symbol sequence in the frequency domain, and maps the parity bit to a subcarrier within a certain distance from the boundary.

4. The radio communication apparatus according to claim 1, wherein the mapping section further maps a data symbol of a greater M-ary number to a subcarrier at a farther distance from a boundary between the first OFDM symbol sequence and the second OFDM symbol sequence in the frequency domain.

5. The radio communication apparatus according to claim 1, wherein the mapping section further maps different data symbols for a same destination to both a nearest subcarrier and a farthest subcarrier from a boundary between the first OFDM symbol sequence and the second OFDM symbol sequence in the frequency domain.

6. The radio communication apparatus according to claim 1, wherein the mapping section further maps different data symbols for a same multicast communication to both a nearest subcarrier and a farthest subcarrier from a boundary between the first OFDM symbol sequence and the second OFDM symbol sequence in the frequency domain.

7. The radio communication apparatus according to claim 1, wherein the mapping section further maps the data symbols requiring higher quality of service to a subcarrier farther from the boundary between the first OFDM symbol sequence and the second OFDM symbol sequence in the frequency domain.

8. The radio communication apparatus according to claim 1, wherein the multiplexing section frequency multiplexes the first OFDM symbol sequence and the second OFDM symbol sequence defining a boundary at a center frequency in a bandwidth used for transmission of the first OFDM symbol sequence and the second OFDM symbol sequence.

9. A radio communication base station apparatus comprising the radio communication apparatus according to claim 1.

10. A radio communication method comprising, when a plurality of OFDM symbols with different guard intervals are frequency multiplexed, using an OFDM symbol where a tail part of one OFDM symbol is not included in a period of the other OFDM symbol for transmission of a pilot symbol.
